# EUROPEAN PATENT APPLICATION

(11) **EP 4 836 403 A1**
(43) Date of publication of application: **04.11.2026**
(21) Application number: 25221596.7
(22) Date of filing: 08.12.2025
(51) Int. Cl.: H04N 19/124, H04N 19/177, H04N 19/18

(54) **QUANTIZATION USING DISTORTION-AWARE ROUNDING OFFSETS**

(30) Priority: 28.04.2025 US 202519191747
(71) Applicant: Intel Corporation, Santa Clara, CA 95054 (US)
(72) Inventor: ZHAO, Bin, Santa Clara, CA 95050 (US); RYZHOV, Dmitry E., Mountain View, CA 94040 (US); MOCCAGATTA, Iole, San Jose, CA 95132 (US); CHIU, Yi-Jen, San Jose, CA 95129 (US); ROWE, Keith W., Shingle Springs, CA 95682 (US)
(74) Representative: HGF

(57) **Abstract**

To achieve better tradeoffs between bitrate and quality in video encoding, an improved scalar quantizer can use distortion-aware rounding offsets based on estimated distortion levels from one or more distortion contributions. A polynomial function can be used to associate distortion level to rounding offset to provide a larger range of rounding offsets. Potentially different functions can be used to define relations in segments of a range of the distortion level. Potentially different functions can be used for different scenarios (e.g., color channels, different ranges of the distortion level). In some embodiments, a group of integer errors can be used to produce more candidate rounding offsets based on the initial rounding offset. The group of candidate rounding offsets can be used to determine a group of candidate integer levels of quantized coefficient and add more flexibility to adjust the quantization error and achieve better tradeoffs between bitrate and quality.

## Description

### Background

Video compression is a technique for making video files smaller and easier to transmit over the Internet. There are different methods and algorithms for video compression, with different performance and tradeoffs. Video compression involves encoding and decoding. Encoding is the process of transforming (uncompressed) video data into a compressed format. Decoding is the process of restoring video data from the compressed format. An encoder-decoder system is called a codec.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 illustrates an encoding system and a plurality of decoding systems, according to some embodiments of the disclosure.
FIG. 2 illustrates an exemplary encoder to encode video frames and output an encoded bitstream, according to some embodiments of the disclosure.
FIG. 3 illustrates an exemplary decoder to decode an encoded bitstream and output a decoded video, according to some embodiments of the disclosure.
FIG. 4 illustrates using different rounding offsets and corresponding decision levels of quantization intervals, according to some embodiments of the disclosure.
FIG. 5 illustrates transform and quantizer, according to some embodiments of the disclosure.
FIG. 6 is a flow diagram illustrating a method for quantization, according to some embodiments of the disclosure.
FIG. 7 is a flow diagram illustrating a method for quantization, according to some embodiments of the disclosure.
FIG. 8 depicts a block diagram of an exemplary computing device, according to some embodiments of the disclosure.

### Detailed Description

### Overview

Video coding or video compression is the process of compressing video data for storage, transmission, and playback. Video compression may involve taking a large amount of raw video data and applying one or more compression techniques to reduce the amount of data needed to represent the video while maintaining an acceptable level of visual quality. In some cases, video compression can offer efficient storage and transmission of video content over limited bandwidth networks.

A video includes one or more (temporal) sequences of video frames or frames. Frames having larger frame indices or which are associated with later timestamps relative to a current frame may be considered frames in the forward direction relative to the current frame. Frames having smaller frame indices or which are associated with previous timestamps relative to a current frame may be considered frames in the backward direction relative to the current frame. A frame may include an image, or a single still image. A frame may have millions of pixels. For example, a frame for an uncompressed 4K video may have a resolution of 3840x2160 pixels. Pixels may have luma/luminance and chroma/chrominance values. The terms "frame" and "picture" may be used interchangeably.

There are several frame types of picture types. I-frames or Intra-frames may be least compressible and do not depend on other frames to decode. I-frames may include scene change frames. An I-frame may be a reference frame for one or more other frames. P-frames may depend on data from previous frames to decode and may be more compressible than I-frames. A P-frame may be a reference frame for one or more other frames. B-frames may depend on data from previous and forward frames to decode and may be more compressible than I-frames and P-frames. A B-frame can refer to two or more frames, such as one frame in the future and one frame in the past. Other frame types may include reference B-frame and non-reference B-frame. Reference B-frame can act as a reference for another frame. A non-reference B-frame is not used as a reference for any frame. Reference B-frames are stored in a decoded picture buffer whereas a non-reference B-frame does not need to be stored in the decoded picture buffer. P-frames and B-frames may be referred to as Inter-frames. The order or encoding hierarchy in which I-frames, P-frames, and B-frames are arranged may be referred to as a group of pictures (GOP). In some cases, a frame may be an instantaneous decoder refresh (IDR) frame within a GOP. An IDR-frame can indicate that no frame after the IDR-frame can reference any frame before the IDR-frame. Therefore, an IDR-frame may signal to a decoder that the decoder may clear the decoded picture buffer. Every IDR-frame may be an I-frame, but an I-frame may or may not be an IDR-frame. A closed GOP may begin with an IDR-frame. A slice may be a spatially distinct region of a frame that is encoded separately from any other region in the same frame.

In some cases, a frame may be partitioned into one or more blocks. Blocks may be used for block-based compression. The blocks of pixels resulting from partitioning may be referred to as partitions. Blocks may have sizes which are much smaller, such as 512x512 pixels, 256x256 pixels, 128x128 pixels, 64x64 pixels, 32x32 pixels, 16x16pixels, 8x8 pixels, 4x4 pixels, etc. A block may include a square or rectangular region of a frame. Various video compression techniques may use different terminology for the blocks or different partitioning structures for creating the blocks. In some video compression techniques, a frame may be partitioned into Coding Tree Units (CTUs) or macroblocks. A CTU can be 32x32 pixels, 64x64 pixels, 128x128 pixels, or larger in size. A macroblock can be between 8x8 pixels and 16x16 pixels in size. A CTU or macroblock may be divided (separately for luma and chroma components) into coding units (CUs) or smaller blocks, e.g., according to a tree structure. A CU, or a smaller block can have a size of 64x64 pixels, 32x32 pixels, 16x16 pixels, 8x8 pixels, or 4x4 pixels.

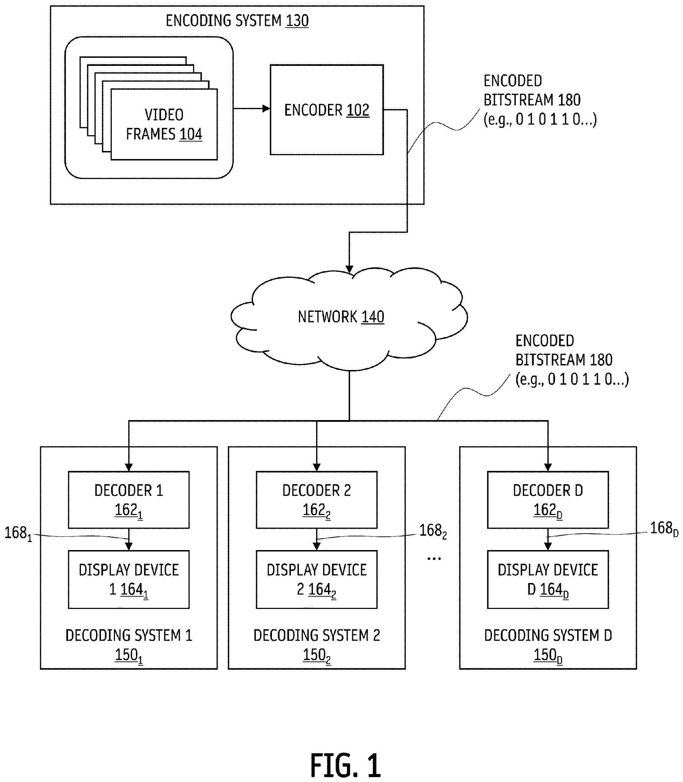

Many video compression systems and standards utilize motion compensated prediction, transform, and quantization techniques. Implementation of such systems and standards is illustrated in greater detail in FIGS. 1-3. The encoder can achieve video compression by converting a prediction error or residue in pixel domain into transform domain, quantizing the transform coefficient, and performing entropy coding on the quantized transform coefficient. The entropy coded quantized transform coefficient is used in the encoded bitstream. In quantization, the transform coefficient of the prediction error/residue can be quantized to an integer with reduced precision in a scalar quantization process, which impacts the number of encoded bits and the reconstructed video quality. The process of video compression can be performed on further prediction errors/residues.

To retain video quality in lossy video compression, the scalar quantizer can be implemented to map unimportant visual information (e.g., high frequency transform coefficients) to zero and map significant visual information (e.g., zero, low, middle frequency transform coefficients) to non-zero integers. A scalar quantizer uses a rounding offset in the quantization process. The scalar quantizer can apply (different) rounding offsets for forward quantization according to equation 1 or 2. The scalar quantizer does not apply the rounding offset for inverse quantization according to equation 3. $L = floor \left(\frac{\left|C\right|}{S}+1/2\right) ⋅ sign \left(C\right)$ (eq. 1) $L = floor \left(\frac{\left|C\right|}{S}+f\right) ⋅ sign \left(C\right)$ (eq. 2) ${C}_{_} = L ⋅ S$ (eq. 3)

|*C*| is the absolute value of a transform coefficient C. The original transform coefficient can be scaled to obtain the transform coefficient *C. L* is an integer level of a quantized coefficient and S is a quantization step size. A transform coefficient *C* can be reconstructed by multiplying the integer level of the quantized coefficient *L* and the quantization step size S. Here f represents other fixed rounding offsets not equal to 1/2. Potentially different rounding offsets f are used in the forward quantization in the video encoder, but they are (usually) not involved in the inverse quantization in the video decoder (as f is absent in equation 3). Rounding offset values are (usually) not encoded into the encoded bitstream by the video encoder.

The *floor*(.) function maps an input number to the nearest integer towards zero. The range of transform coefficients C where the transform coefficients are quantized to zero is called a deadzone. The *sign*(*.* ) function returns the sign information of an input number (e.g., -1, 0, +1). In some implementations, the *sign*(.) function could be omitted by using sign hiding methods (e.g., hiding the sign information in the video encoder and deriving the sign information in the video decoder).

For Uniform Forward Quantization (UFQ), as illustrated by equation 1, a fixed rounding offset *f* = 1/2 is used for coefficient quantization. In this case, the deadzone size Δ is $Δ = 2 \left(1-\frac{1}{2}\right) ∗ S = S$ .

For Biased Forward Quantization (BFQ), as illustrated by equation 2, a rounding offset *f* in the range of [0,1/2) can be used for coefficient quantization to keep the quantization error small. In this case, the deadzone size Δ is Δ= 2(1 - *f*) * *S.*

For inverse quantization (IQ), as illustrated by equation 3, a transform coefficient *C* can be reconstructed by multiplying the integer level of the quantized coefficient *L* and the quantization step size S.

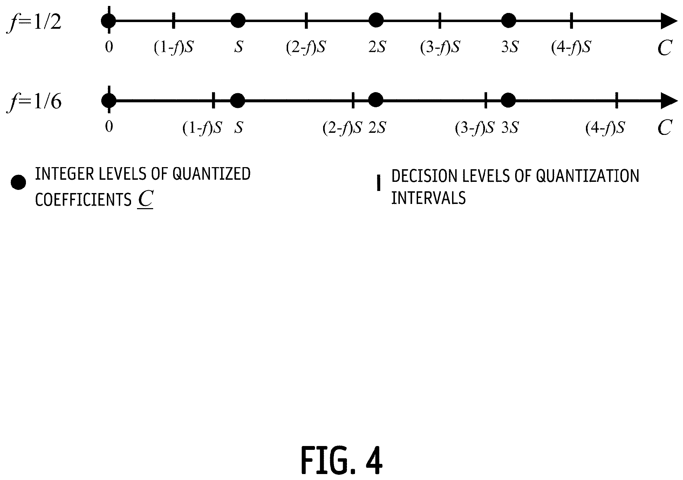

The scalar quantizers using different values for the rounding offset *f* for UFQ and BFQ are illustrated in FIG. 4. In particular, FIG. 4 depicts using different fixed rounding offsets *f*, e.g., *f* = 1/2 and *f* = 1/6, and corresponding decision levels of quantization intervals used in coefficient quantization.

Given a quantization step size S, the deadzone size Δ can be increased as the rounding offset *f* decreases. In addition, when the deadzone size Δ increases, more close-to-zero transform coefficients could be quantized to zeros and fewer non-zero quantized coefficients would be encoded, which could result in smaller bitstream size or smaller bitrate, but at the cost of higher distortion or lower quality.

A video encoder has an opportunity to determine suitable values for the rounding offset *f* based on other information, such as quantization statistics and prior information, to better make the tradeoff between bitrate and quality. In other words, improved quantization methods using suitable rounding offsets can be implemented in the video encoder to achieve better tradeoffs between bitrate and quality for different scenarios and color channels.

Some solutions are not ideal and have one or more shortcomings. In one video compression standard, the scalar quantizer implements BFQ and uses only two fixed rounding offsets by default. *f =* 1/3 for all Intra-coded blocks. f = 1/6 for all Inter-coded blocks. In some video compression standards, the scalar quantizer implements UFQ and uses a single fixed rounding offset, *f* = 1/2. Based on an initial integer level calculated by the UFQ, some video compression standards support advanced quantization techniques to determine the proper integer level of a quantized coefficient by considering the tradeoff between rate and distortion (e.g., by implementing Rate-Distortion Optimized Quantization (RDOQ), Sign Hiding (SH), and Trellis-Coded Quantization (TCQ)). In these advanced quantization techniques, Rate-Distortion (RD) tradeoffs are calculated for individual integer level candidates, potentially in a loop with many iterations, to find an optimal integer level of a quantized coefficient, which demands a lot of computations with quite high complexity.

To achieve better tradeoff between bitrate and quality in video encoding, a rounding offset can be determined based on an estimated distortion level. The estimated distortion level can be calculated or determined based on a weighted sum of one or more distortion contributions. Different weights can be applied to distortion contributions to represent different impacts. The weights can be varied to modify the influence that a distortion contribution has on the estimated distortion level. In particular, the rounding offset can be determined according to a function that associates (e.g., relates) distortion level to rounding offset. A function, such as a polynomial function, can be used to associate/relate distortion level to rounding offset, e.g., to provide a larger range of rounding offsets. Applying a suitable function to determine the rounding offset based on the estimated distortion level can expand the possible rounding offsets from one or two fixed rounding offset(s) to many more rounding offsets, allowing a finer grained selection of a rounding offset that can better tradeoff bitrate and quality. The function can be defined to have different behaviors, e.g., to prioritize bitrate, to prioritize quality, to more aggressively impact bitrate, to more aggressively impact quality, etc.

Potentially different (polynomial) functions can be used to define relations for a particular range of the distortion level. Potentially different (polynomial) functions can be used to define relations in one or more segments within the range of the distortion level. Potentially different (polynomial) functions can be used to define relations between distortion level and rounding offset for different scenarios (e.g., Intra-coded blocks versus Inter-coded blocks, types of content, types of the GOP, the frame positions in a GOP, motion information, location of block in the frame, etc.) and color channels (e.g., Luma-Chroma channels, Y-U-V channels, R-G-B channels, etc.). Potentially different weights can be used for distortion estimation calculations for different scenarios (e.g., Intra-coded blocks versus Inter-coded blocks, types of content, types of the GOP, the frame positions in a GOP, motion information, location of block in the frame, etc.) and color channels (e.g., Luma-Chroma channels, Y-U-V channels, R-G-B channels, etc.).

In some embodiments, a group of one or more rounding offsets can be used to determine a group of one or more candidate integer levels of quantized coefficient. In particular, candidate rounding offsets may include one or more neighboring rounding offsets around the initial rounding offset based on a group of one or more predefined integer errors or an integer error set. A selection operation, e.g., based on RD tradeoffs, can be utilized to select a (final) integer level of quantized coefficient. The (final) integer level of quantized coefficient would be used in generating the encoded bitstream. In some cases, the lower frequency components of a block have more transform coefficients than higher frequency components. The candidate integer level generation can take the computing complexity into consideration for different frequency transform coefficients. For example, the zero and low frequency transform coefficients could use a smaller number of candidate rounding offsets to generate fewer candidate integer levels, while the high frequency transform coefficients could use a larger number of candidate rounding offsets to generate more candidate integer levels. The candidate generation and selection methods can depend on one or more tradeoffs between computing complexity and target accuracy or quality. In some embodiments, the candidate integer levels generation based on a group of one or more candidate rounding offsets and the selection operation can be omitted or skipped.

Implementing these improved quantization techniques using distortion-aware rounding offsets can achieve significant compression efficiency improvement and Bjontegaard Delta rate (BD-Rate) savings in terms of both objective and subjective quality metrics (e.g., peak signal-to-noise ratio (PSNR) BD-Rate and video multi-method assessment fusion (VMAF) BD-Rate), when compared to some quantization methods that use one or two fixed rounding offset(s).

The improved quantization techniques described and illustrated herein may be applied to a variety of codecs, such as AVC (Advanced Video Coding), HEVC (High Efficiency Video Coding), AV1 (AOMedia Video 1), AV2 (AOMedia Video 2), VVC (Versatile Video Coding), and VP9. AVC, also known as "ITU-T H.264", was approved in 2003 and last revised 2021-08-22. HEVC, also known as "ITU-T H.265", was approved in 2013 and last revised 2023-09-13. AV1 is a video coding codec designed for video transmissions over the Internet. "AV1 Bitstream & Decoding Process Specification" version 1.1.1 with Errata was last modified in 2019. AV2 is in development. VVC, also known as "ITU-T H.266", was finalized in 2020. VP9 is an open video codec which became available on 2013-06-17.

The improved quantization techniques can be implemented as a software feature and deployed in graphics drivers. The improved quantization techniques can be implemented in hardware computing circuitry of graphics chips/processors.

### Video compression

FIG. 1 illustrates encoding system 130 and one or more decoding systems 150_{1...D}, according to some embodiments of the disclosure.

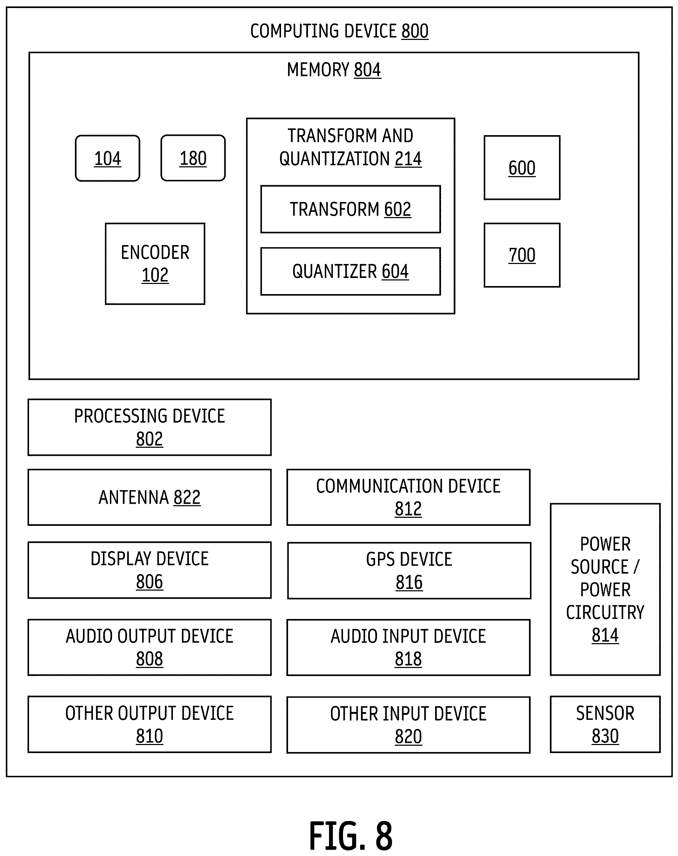

Encoding system 130 may be implemented on computing device 800 of FIG. 8. Encoding system 130 can be implemented in the cloud or in a data center. Encoding system 130 can be implemented on a device that is used to capture the video. Encoding system 130 can be implemented on a standalone computing system. Encoding system 130 may perform the process of encoding in video compression. Encoding system 130 may receive a video (e.g., uncompressed video, original video, raw video, etc.) comprising a sequence of video frames 104. The video frames 104 may include image frames or images that make up the video. A video may have a frame rate or number of frames per second (FPS), that defines the number of frames per second of video. The higher the FPS, the more realistic and fluid the video looks. Typically, FPS is greater than 24 frames per second for a natural, realistic viewing experience to a human viewer. Examples of video may include a television episode, a movie, a short film, a short video (e.g., less than 15 seconds long), a video capturing gaming experience, computer-screen content, video conferencing content, live event broadcast content, sports content, a surveillance video, a video shot using a mobile computing device (e.g., a smartphone), etc. In some cases, video may include a mix or combination of different types of video.

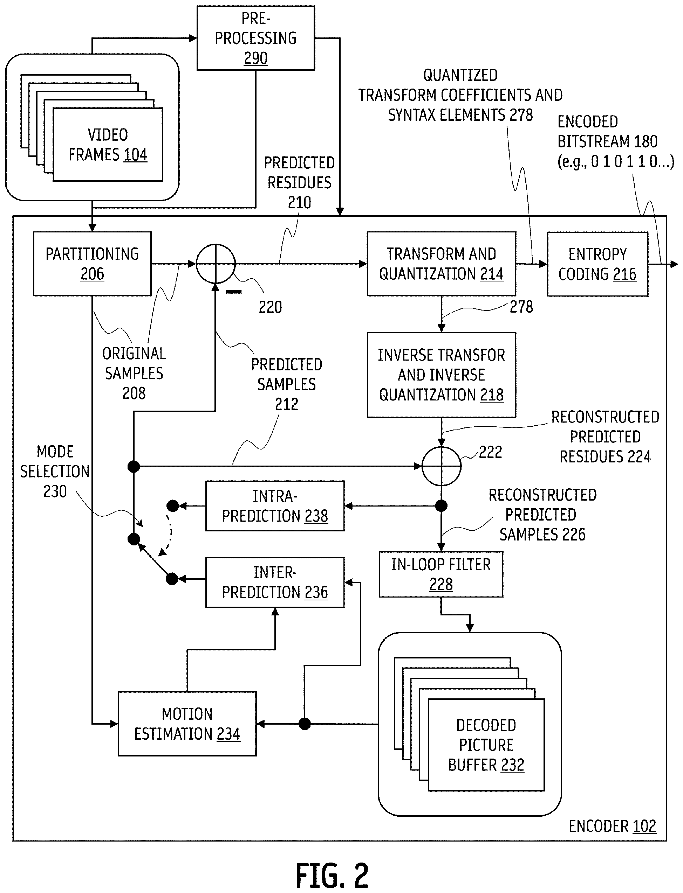

Encoding system 130 may include encoder 102 that receives video frames 104 and encodes video frames 104 into encoded bitstream 180. An exemplary implementation of encoder 102 is illustrated in FIG. 2.

Encoded bitstream 180 may be compressed, meaning that encoded bitstream 180 may be smaller in size than video frames 104. Encoded bitstream 180 may include a series of bits, e.g., having 0's and 1's. Encoded bitstream 180 may have header information, payload information, and footer information, which may be encoded as bits in the bitstream. Header information may provide information about one or more of: the format of encoded bitstream 180, the encoding process implemented in encoder 102, the parameters of encoder 102, and metadata of encoded bitstream 180. For example, header information may include one or more of: resolution information, frame rate, aspect ratio, color space, etc. Payload information may include data representing content of video frames 104, such as samples frames, symbols, syntax elements, etc. For example, payload information may include bits that encode one or more of motion predictors, transform coefficients, prediction modes, and quantization levels of video frames 104. Footer information may indicate an end of the encoded bitstream 180. Footer information may include other information including one or more of: checksums, error correction codes, and signatures. Format of encoded bitstream 180 may vary depending on the specification of the encoding and decoding process, i.e., the codec.

Encoded bitstream 180 may include packets, where encoded video data and signaling information may be packetized. One exemplary format is the Open Bitstream Unit (OBU), which is used in AV1 encoded bitstreams. An OBU may include a header and a payload. The header can include information about the OBU, such as information that indicates the type of OBU. Examples of OBU types may include sequence header OBU, frame header OBU, metadata OBU, temporal delimiter OBU, and tile group OBU. Payloads in OBUs may carry quantized transform coefficients and syntax elements that may be used in the decoder to properly decode the encoded video data to regenerate video frames.

Encoded bitstream 180 may be transmitted to one or more decoding systems 150_{1...D}, via network 140. Network 140 may be the Internet. Network 140 may include one or more of: cellular data networks, wireless data networks, wired data networks, cable Internet networks, fiber optic networks, satellite Internet networks, etc.

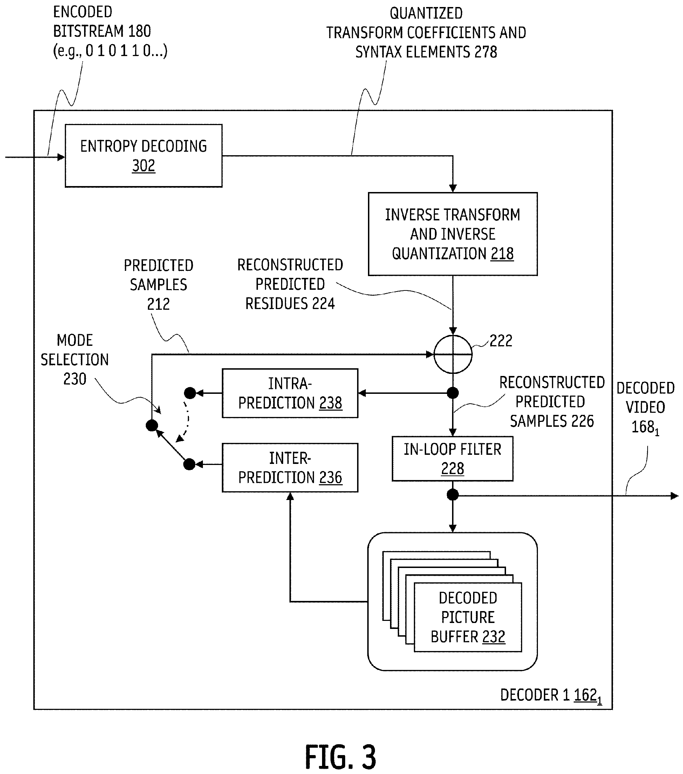

D number of decoding systems 150_{1...D} are illustrated. At least one of the decoding systems 150_{1...D} may be implemented on computing device 800 of FIG. 8. Examples of systems 150_{1...D} may include personal computers, mobile computing devices, gaming devices, augmented reality devices, mixed reality devices, virtual reality devices, televisions, etc. Each one of decoding systems 150_{1...D} may perform the process of decoding in video compression. Each one of decoding systems 150_{1...D} may include a decoder (e.g., decoder 1...D 162_{1...D}), and one or more display devices (e.g., display device 1...D 164_{1...D}). An exemplary implementation of a decoder, e.g., decoder 1 162₁, is illustrated in FIG. 3.

For example, decoding system 1 150₁, may include decoder 1 162₁ and a display device 1 164₁. Decoder 1 162₁ may implement a decoding process of video compression. Decoder 1 162₁ may receive encoded bitstream 180 and produce decoded video 168₁. Decoded video 168₁ may include a series of video frames, which may be a version or reconstructed version of video frames 104 encoded by encoding system 130. Display device 1 164₁ may output the decoded video 168₁ for display to one or more human viewers or users of decoding system 1 150₁.

For example, decoding system 2 150₂, may include decoder 2 162₂ and a display device 2 164₂. Decoder 2 162₂ may implement a decoding process of video compression. Decoder 2 162₂ may receive encoded bitstream 180 and produce decoded video 168₂. Decoded video 168₂ may include a series of video frames, which may be a version or reconstructed version of video frames 104 encoded by encoding system 130. Display device 2 164₂ may output the decoded video 168₂ for display to one or more human viewers or users of decoding system 2 150₂.

For example, decoding system D 150_{D}, may include decoder D 162_{D} and a display device D 164_{D}. Decoder D 162_{D} may implement a decoding process of video compression. Decoder D 162_{D} may receive encoded bitstream 180 and produce decoded video 168_{D}. Decoded video 168_{D} may include a series of video frames, which may be a version or reconstructed version of video frames 104 encoded by encoding system 130. Display device D 164_{D} may output the decoded video 168_{D} for display to one or more human viewers or users of decoding system D 150_{D}.

### Video encoder

FIG. 2 illustrates encoder 102 to encode video frames 104 and output an encoded bitstream, according to some embodiments of the disclosure. Encoder 102 may include one or more of: signal processing operations and data processing operations, including Inter- and Intra-prediction, transform, quantization, in-loop filtering, and entropy coding. Encoder 102 may include a reconstruction loop involving inverse quantization, and inverse transformation to guarantee that the decoder would see the same reference blocks and frames. Encoder 102 may receive video frames 104 and encode video frames 104 into encoded bitstream 180. Encoder 102 may include one or more of partitioning 206, transform and quantization 214, inverse transform and inverse quantization 218, in-loop filter 228, motion estimation 234, Inter-prediction 236, Intra-prediction 238, and entropy coding 216.

In some embodiments, video frames 104 may be processed by pre-processing 290 before encoder 102 applies an encoding process. Pre-processing 290 and encoder 102 may form encoding system 130 as seen in FIG. 1. Pre-processing 290 may analyze video frames 104 to determine picture statistics that may be used to inform one or more encoding processes to be performed by one or more components in encoder 102. Pre-processing 290 may determine information that may be used for quantization (QP) adaptation, scene cut detection, and frame type adaptation. Pre-processing 290 may determine for each frame, a recommended frame type. Pre-processing 290 may apply motion compensated temporal filtering (MCTF) to denoise video frames 104. Filtered versions of video frames 104 with MCTF applied may be provided to encoder 102 as the input video frames (instead of video frames 104), e.g., to partitioning 206. MCTF may include a motion estimation analysis operation and a bilateral filtering operation. MCTF may attenuate random picture components in a motion aware fashion to improve coding efficiency. MCTF may operate on blocks of 8x8 pixels, or 16x16 pixels. MCTF may operate separately on luminance values and chroma values. MCTF may be applied in three dimensions (e.g., spatial directions and a temporal direction). MCTF may produce a noise estimate of various blocks. In some embodiments, one or more operations of pre-processing 290 may be implemented as software instructions being executed by a processor. In some embodiments, one or more operations of pre-processing 290 may be implemented using computing circuitry designed to perform the one or more operations in hardware.

Partitioning 206 may divide a frame in video frames 104 (or filtered version of video frames 104 from pre-processing 290) into blocks of pixels. Different codecs may allow different variable range of block sizes. In one codec, a frame may be partitioned by partitioning 206 into blocks of size 128x128 or 64x64 pixels. In some cases, a frame may be partitioned by partitioning 206 into blocks of 256x256 or 512x512 pixels. In some cases, a frame may be partitioned by partitioning 206 into blocks of 32x32 or 16x16 pixels. Large blocks may be referred to as superblocks, macroblocks, or CTUs. Partitioning 206 may further divide each large block using a multi-way partition tree structure. In some cases, a partition of a superblock can be recursively divided further by partitioning 206 using the multi-way partition tree structure (e.g., down to 4x4 size blocks/partitions). In another codec, a frame may be partitioned by partitioning 206 into CTUs of size 128x128 pixels. Partitioning 206 may divide a CTU using a quadtree partitioning structure into four CUs. Partitioning 206 may further recursively divide a CU using the quadtree partitioning structure. Partitioning 206 may (further) subdivide a CU using a multi-type tree structure (e.g., a quadtree, a binary tree, or ternary tree structure). A smallest CU may have a size of 4x4 pixels. A CU may be referred to herein as a block or a partition. Partitioning 206 may output original samples 208, e.g., as blocks of pixels, or partitions.

In some cases, one or more operations in partitioning 206 may be implemented in Intra-prediction 238 and/or Inter-prediction 236.

Intra-prediction 238 may predict samples of a block or partition from reconstructed predicted samples of previously encoded spatial neighboring/reference blocks of the same frame. Intra-prediction 238 may receive reconstructed predicted samples 226 (of previously encoded spatial neighbor blocks of the same frame). Reconstructed predicted samples 226 may be generated by summer 222 from reconstructed predicted residues 224 and predicted samples 212. Intra-prediction 238 may determine a suitable predictor for predicting the samples from reconstructed predicted samples of previously encoded spatial neighboring/reference blocks of the same frame (thus making an Intra-prediction decision). Intra-prediction 238 may generate predicted samples 212 generated using the suitable predictor. Intra-prediction 238 may output or identify the neighboring/reference block and a predictor used in generating the predicted samples 212. The identified neighboring/reference block and predictor may be encoded in the encoded bitstream 180 to enable a decoder to reconstruct a block using the same neighboring/reference block and predictor. In one codec, Intra-prediction 238 may support a number of diverse predictors, e.g., 56 different predictors. In one codec, Intra-prediction 238 may support a number of diverse predictors, e.g., 95 different predictors. Some predictors, e.g., directional predictors, may capture different spatial redundancies in directional textures. Pixel values of a block can be predicted using a directional predictor in Intra-prediction 238 by extrapolating pixel values of a neighboring/reference block along a certain direction. Intra-prediction 238 of different codecs may support different sets of predictors to exploit different spatial patterns within the same frame. Examples of predictors may include direct current (DC), planar, Paeth, smooth, smooth vertical, smooth horizontal, recursive-based filtering modes, chroma-from-luma, IBC, color palette or palette coding, multiple-reference line, Intra sub-partition, matrix-based Intra-prediction (matrix coefficients may be defined by offline training using neural networks), angular prediction, wide-angle prediction, cross-component linear model, template matching, etc. IBC works by copying a reference block within the same frame to predict a current block. Palette coding or palette mode works by using a color palette having a few colors (e.g., 2-8 colors), and encoding a current block using indices to the color palette. In some cases, Intra-prediction 238 may perform block-prediction, where a predicted block may be produced from a reconstructed neighboring/reference block of the same frame using a vector. Optionally, an interpolation filter of a certain type may be applied to the predicted block to blend pixels of the predicted block. Pixel values of a block can be predicted using a vector compensation process in Intra-prediction 238 by translating a neighboring/reference block (within the same frame) according to the vector (and optionally applying an interpolation filter to the neighboring/reference block) to produce predicted samples 212. Intra-prediction 238 may output or identify the vector applied in generating predicted samples 212. In some codecs, Intra-prediction 238 may encode (1) a residual vector generated from the applied vector and a vector predictor candidate, and (2) information that identifies the vector predictor candidate, rather than encoding the applied vector itself. Intra-prediction 238 may output or identify an interpolation filter type applied in generating predicted samples 212.

Motion estimation 234 and Inter-prediction 236 may predict samples of a block from samples of previously encoded frames, e.g., reference frames in decoded picture buffer 232. Motion estimation 234 and Inter-prediction 236 may perform operations to make Inter-prediction decisions. Motion estimation 234 may perform motion analysis and determine motion information for a current frame. Motion estimation 234 may determine a motion field for a current frame. A motion field may include motion vectors for blocks of a current frame. Motion estimation 234 may determine an average magnitude of motion vectors of a current frame. Motion estimation 234 may determine motion information, which may indicate how much motion is present in a current frame (e.g., large motion, very dynamic motion, small/little motion, very static).

Motion estimation 234 and Inter-prediction 236 may perform motion compensation, which may involve identifying a suitable reference block and a suitable motion predictor (or motion vector predictor) for a block and optionally an interpolation filter to be applied to the reference block. Motion estimation 234 may receive original samples 208 from partitioning 206. Motion estimation 234 may receive samples from decoded picture buffer 232 (e.g., samples of previously encoded frames or reference frames). Motion estimation 234 may use a number of reference frames for determining one or more suitable motion predictors. A motion predictor may include a reference block and a motion vector that can be applied to generate a motion compensated block or predicted block. Motion predictors may include motion vectors that capture the movement of blocks between frames in a video. Motion estimation 234 may output or identify one or more reference frames and one or more suitable motion predictors. Inter-prediction 236 may apply the one or more suitable motion predictors determined in motion estimation 234 and one or more reference frames to generate predicted samples 212. The identified reference frame(s) and motion predictor(s) may be encoded in the encoded bitstream 180 to enable a decoder to reconstruct a block using the same reference frame(s) and motion predictor(s). In one codec, motion estimation 234 may implement single reference frame prediction mode, where a single reference frame with a corresponding motion predictor is used for Inter-prediction 236. Motion estimation 234 may implement compound reference frame prediction mode where two reference frames with two corresponding motion predictors are used for Inter-prediction 236. In one codec, motion estimation 234 may implement techniques for searching and identifying good reference frame(s) that can yield the most efficient motion predictor. The techniques in motion estimation 234 may include searching for good reference frame(s) candidates spatially (within the same frame) and temporally (in previously encoded frames). The techniques in motion estimation 234 may include searching a deep spatial neighborhood to find a spatial candidate pool. The techniques in motion estimation 234 may include utilizing temporal motion field estimation mechanisms to generate a temporal candidate pool. The techniques in motion estimation 234 may use a motion field estimation process. After temporal and spatial candidates may be ranked and a suitable motion predictor may be determined. In one codec, Inter-prediction 236 may support a number of diverse motion predictors. Examples of predictors may include geometric motion vectors (complex, non-linear motion), warped motion compensation (affine transformations that capture non-translational object movements), overlapped block motion compensation, advanced compound prediction (compound wedge prediction, difference-modulated masked prediction, frame distance-based compound prediction, and compound Inter-Intra-prediction), dynamic spatial and temporal motion vector referencing, affine motion compensation (capturing higher-order motion such as rotation, scaling, and sheering), adaptive motion vector resolution modes, geometric partitioning modes, bidirectional optical flow, prediction refinement with optical flow, bi-prediction with weights, extended merge prediction, etc. Optionally, an interpolation filter of a certain type may be applied to the predicted block to blend pixels of the predicted block. Pixel values of a block can be predicted using the motion predictor/vector determined in a motion compensation process in motion estimation 234 and Inter-prediction 236 and optionally applying an interpolation filter. In some cases, Inter-prediction 236 may perform motion compensation, where a predicted block may be produced from a reconstructed reference block of a reference frame using the motion predictor/vector. Inter-prediction 236 may output or identify the motion predictor/vector applied in generating predicted samples 212. In some codecs, Inter-prediction 236 may encode (1) a residual vector generated from the applied vector and a vector predictor candidate, and (2) information that identifies the vector predictor candidate, rather than encoding the applied vector itself. Inter-prediction 236 may output or identify an interpolation filter type applied in generating predicted samples 212.

Mode selection 230 may be informed by components such as motion estimation 234 to determine whether Inter-prediction 236 or Intra-prediction 238 may be more efficient for encoding a block (thus making an encoding decision). Inter-prediction 236 may output predicted samples 212 of a predicted block. Inter-prediction 236 may output a selected predictor and a selected interpolation filter (if applicable) that may be used to generate the predicted block. Intra-prediction 238 may output predicted samples 212 of a predicted block. Intra-prediction 238 may output a selected predictor and a selected interpolation filter (if applicable) that may be used to generate the predicted block. Regardless of the mode, predicted residues 210 may be generated by subtractor 220 by subtracting original samples 208 by predicted samples 212. In some cases, predicted residues 210 may include residual vectors from Inter-prediction 236 and/or Intra-prediction 238.

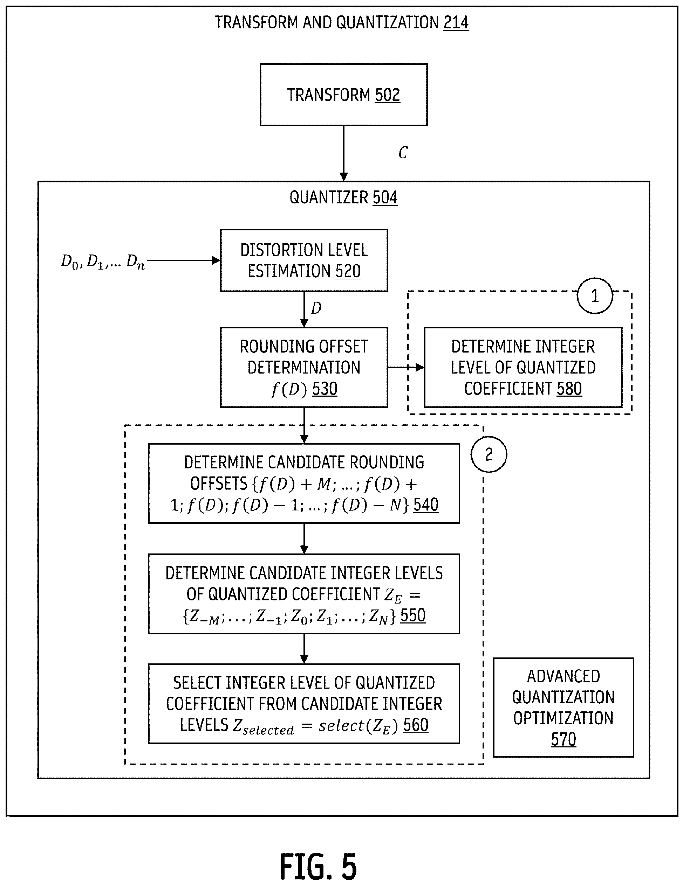

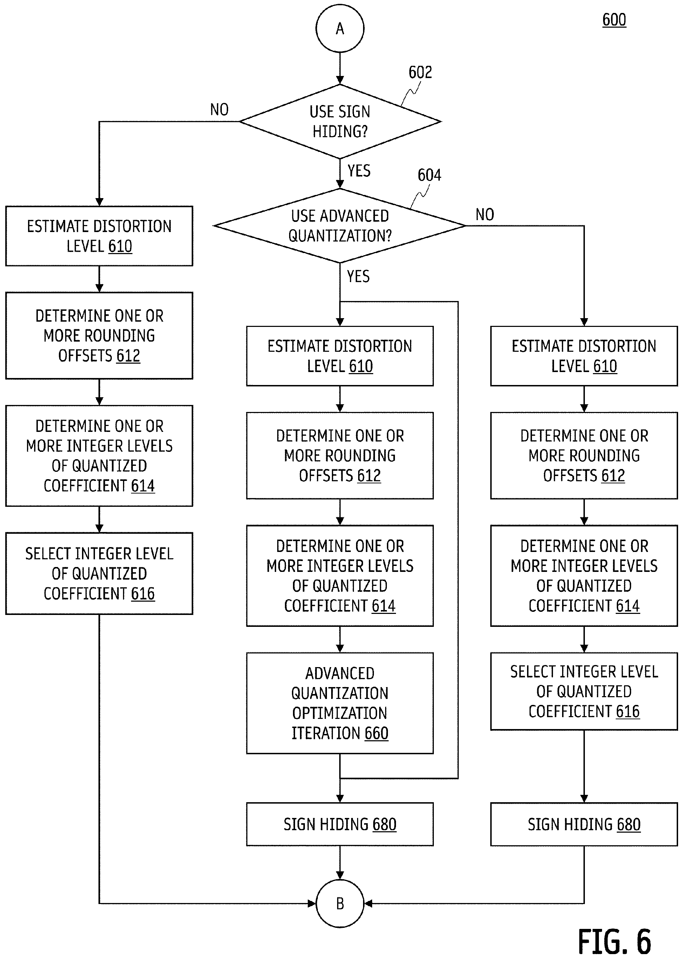

Transform and quantization 214 may receive predicted residues 210. Predicted residues 210 may be generated by subtractor 220 that takes original samples 208 and subtracts predicted samples 212 to output predicted residues 210. Predicted residues 210 may be referred to as prediction error of the Intra-prediction 238 and Inter-prediction 236 (e.g., error between the original samples and predicted samples 212). Prediction error has a smaller range of values than the original samples and can be coded with fewer bits in encoded bitstream 180. Transform and quantization 214 may include one or more of transforming and quantizing. Transforming may include converting the predicted residues 210 from the spatial domain to the frequency domain. Transforming may include applying one or more transform kernels. Examples of transform kernels may include horizontal and vertical forms of discrete cosine transform (DCT), asymmetrical discrete sine transform (ADST), flip ADST, and identity transform (IDTX), multiple transform selection, low frequency non-separatable transform, subblock transform, non-square transforms, DCT-VIII, discrete sine transform VII (DST-VII), discrete wavelet transform (DWT), etc. Transforming may convert the predicted residues 210 into transform coefficients. One or more operations for transforming may be performed by transform 502 of FIG. 5. Quantizing may quantize the transformed coefficients, e.g., by reducing the precision of the transform coefficients. Quantizing may include using quantization matrices (e.g., linear and non-linear quantization matrices) having quantization parameters or quantization step sizes. The elements in the quantization matrix can be larger for higher frequency bands and smaller for lower frequency bands, which means that the higher frequency coefficients are more coarsely quantized, and the lower frequency coefficients are more finely quantized. Quantizing may include dividing each transform coefficient by a corresponding element (e.g., a quantization parameter) in the quantization matrix and rounding to the nearest integer. Effectively, the quantization matrices may implement different QPs for different frequency bands and chroma planes and can use spatial prediction. A suitable quantization matrix can be selected and signaled for each frame and encoded in encoded bitstream 180. One or more operations for quantization may be performed by quantizer 504 of FIG. 6. Transform and quantization 214 may output quantized transform coefficients and syntax elements 278 that indicate the coding modes and parameters used in the encoding process implemented in encoder 102.

Herein, a QP refers to a parameter in video encoding that controls the level of compression by determining how much detail is preserved or discarded during the encoding process. QP is directly associated with quantization step size. Larger step size may result in higher loss in information but smaller file sizes. Smaller step size may result in better preservation of information but larger file sizes. QP can range from 0 to 51, where lower values maintain higher quality but result in larger file sizes, while higher values increase compression but introduce more visual artifacts. The QP value directly influences how the DCT coefficients are divided and rounded in transform and quantization 214. Larger QP values cause more aggressive rounding, effectively removing high frequency details that are less perceptible to human vision. This parameter is used in the rate-distortion optimization process of the encoder, allowing encoders to balance visual quality against bandwidth constraints. Modern encoders can dynamically adjust QP values at both frame and macroblock levels to optimize compression based on scene complexity and motion. In some cases, the adjustment to the QP is made to a base QP using a delta QP or a QP offset. Delta QP (or QP offset) is a mechanism in video encoding that allows for relative adjustments to the base QP value for specific coding units or frame types. These offsets enable transform and quantization 214 to apply different levels of compression to different parts of the video stream, optimizing the balance between quality and bitrate. For example, B-frames typically use higher QP values (positive delta) compared to I-frames since they're less critical for overall quality, while regions of high visual importance might receive negative delta QPs to preserve more detail. In many encoders, delta QPs can be configured for various structural elements like slice types, hierarchical coding layers, or specific regions of interest within frames. This granular control over quantization helps achieve better subjective quality by allocating more bits to visually significant content while maintaining efficient compression for less noticeable areas.

In some embodiments, the QPs used by transform and quantization 214 are determined by pre-processing 290. Pre-processing 290 may produce one or more quantization parameters to be used by transform and quantization 214.

Inverse transform and inverse quantization 218 may apply the inverse operations performed in transform and quantization 214 to produce reconstructed predicted residues 224 as part of a reconstruction path to produce decoded picture buffer 232 for encoder 102. Inverse transform and inverse quantization 218 may receive quantized transform coefficients and syntax elements 278. Inverse transform and inverse quantization 218 may perform one or more inverse quantization operations, e.g., applying an inverse quantization matrix, to obtain the unquantized/original transform coefficients. Inverse transform and inverse quantization 218 may perform one or more inverse transform operations, e.g., inverse transform (e.g., inverse DCT, inverse DWT, etc.), to obtain reconstructed predicted residues 224. A reconstruction path is provided in encoder 102 to generate reference blocks and frames, which are stored in decoded picture buffer 232. The reference blocks and frames may match the blocks and frames to be generated in the decoder. The reference blocks and frames are used as reference blocks and frames by motion estimation 234, Inter-prediction 236, and Intra-prediction 238.

In-loop filter 228 may implement filters to smooth out artifacts introduced by the encoding process in encoder 102 (e.g., processing performed by partitioning 206 and transform and quantization 214). In-loop filter 228 may receive reconstructed predicted samples 226 from summer 222 and output frames to decoded picture buffer 232. Examples of in-loop filters may include constrained low-pass filter, directional deringing filter, edge-directed conditional replacement filter, loop restoration filter, Wiener filter, self-guided restoration filters, constrained directional enhancement filter (CDEF), LMCS filter, Sample Adaptive Offset (SAO) filter, Adaptive Loop Filter (ALF), cross-component ALF, low-pass filter, deblocking filter, etc. For example, applying a deblocking filter across a boundary between two blocks can resolve blocky artifacts caused by the Gibbs phenomenon. In some embodiments, in-loop filter 228 may fetch data from a frame buffer having reconstructed predicted samples 226 of various blocks of a video frame. In-loop filter 228 may determine whether to apply an in-loop filter or not. In-loop filter 228 may determine one or more suitable filters that achieve good visual quality and/or one or more suitable filters that suitably remove the artifacts introduced by the encoding process in encoder 102. In-loop filter 228 may determine a type of an in-loop filter to apply across a boundary between two blocks. In-loop filter 228 may determine one or more strengths of an in-loop filter (e.g., filter coefficients) to apply across a boundary between two blocks based on the reconstructed predicted samples 226 of the two blocks. In some cases, in-loop filter 228 may take a desired bitrate into account when determining one or more suitable filters. In some cases, in-loop filter 228 may take a specified QP into account when determining one or more suitable filters. In-loop filter 228 may apply one or more (suitable) filters across a boundary that separates two blocks. After applying the one or more (suitable) filters, in-loop filter 228 may write (filtered) reconstructed samples to a frame buffer such as decoded picture buffer 232.

Entropy coding 216 may receive quantized transform coefficients and syntax elements 278 (e.g., referred to herein as symbols) and perform entropy coding. Entropy coding 216 may generate and output encoded bitstream 180. Entropy coding 216 may exploit statistical redundancy and apply lossless algorithms to encode the symbols and produce a compressed bitstream, e.g., encoded bitstream 180. Entropy coding 216 may implement some version of arithmetic coding. Different versions may have different pros and cons. In one codec, entropy coding 216 may implement (symbol to symbol) adaptive multi-symbol arithmetic coding. In another codec, entropy coding 216 may implement context-based adaptive binary arithmetic coder (CABAC). Binary arithmetic coding differs from multi-symbol arithmetic coding. Binary arithmetic coding encodes only a bit at a time, e.g., having either a binary value of 0 or 1. Binary arithmetic coding may first convert each symbol into a binary representation (e.g., using a fixed number of bits per-symbol). Handling just binary value of 0 or 1 can simplify computation and reduce complexity. Binary arithmetic coding may assign a probability to each binary value (e.g., a chance of the bit having a binary value of 0 and a chance of the bit having a binary value of 1). Multi-symbol arithmetic coding performs encoding for an alphabet having at least two or three symbol values and assigns a probability to each symbol value in the alphabet. Multi-symbol arithmetic coding can encode more bits at a time, which may result in a fewer number of operations for encoding the same amount of data. Multi-symbol arithmetic coding can require more computation and storage (since probability estimates may be updated for every element in the alphabet). Maintaining and updating probabilities (e.g., cumulative probability estimates) for each possible symbol value in multi-symbol arithmetic coding can be more complex (e.g., complexity grows with alphabet size). Multi-symbol arithmetic coding is not to be confused with binary arithmetic coding, as the two different entropy coding processes are implemented differently and can result in different encoded bitstreams for the same set of quantized transform coefficients and syntax elements 278.

### Video decoder

FIG. 3 illustrates decoder 1 162₁ to decode an encoded bitstream and output a decoded video, according to some embodiments of the disclosure. Decoder 1 162₁ may include one or more of: signal processing operations and data processing operations, including entropy decoding, inverse transform, inverse quantization, Inter- and Intra-prediction, in-loop filtering, etc. Decoder 1 162₁ may have signal and data processing operations that mirror the operations performed in the encoder. Decoder 1 162₁ may apply signal and data processing operations that are signaled in encoded bitstream 180 to reconstruct the video. Decoder 1 162₁ may receive encoded bitstream 180 and generate and output decoded video 168₁ having a plurality of video frames. The decoded video 168₁ may be provided to one or more display devices for display to one or more human viewers. Decoder 1 162₁ may include one or more of entropy decoding 302, inverse transform and inverse quantization 218, in-loop filter 228, Inter-prediction 236, and Intra-prediction 238. Some of the functionalities are previously described and used in the encoder, such as encoder 102 of FIG. 2.

Entropy decoding 302 may decode the encoded bitstream 180 and output symbols that were coded in the encoded bitstream 180. The symbols may include quantized transform coefficients and syntax elements 278. Entropy decoding 302 may reconstruct the symbols from the encoded bitstream 180.

Inverse transform and inverse quantization 218 may receive quantized transform coefficients and syntax elements 278 and perform operations which are performed in the encoder. Inverse transform and inverse quantization 218 may output reconstructed predicted residues 224. Summer 222 may receive reconstructed predicted residues 224 and predicted samples 212 and generate reconstructed predicted samples 226. Inverse transform and inverse quantization 218 may output syntax elements 278 having signaling information for informing/instructing/controlling operations in decoder 1 162₁ such as mode selection 230, Intra-prediction 238, Inter-prediction 236, and in-loop filter 228.

Depending on the prediction modes signaled in the encoded bitstream 180 (e.g., as syntax elements in quantized transform coefficients and syntax elements 278), Intra-prediction 238 or Inter-prediction 236 may be applied to generate predicted samples 212.

Summer 222 may sum predicted samples 212 of a decoded reference block and reconstructed predicted residues 224 to produce reconstructed predicted samples 226 of a reconstructed block. For Intra-prediction 238, the decoded reference block may be in the same frame as the block that is being decoded or reconstructed. For Inter-prediction 236, the decoded reference block may be in a different (reference) frame in decoded picture buffer 232.

Intra-prediction 238 may determine a reconstructed vector based on a residual vector and a selected vector predictor candidate. Intra-prediction 238 may apply a reconstructed predictor or vector (e.g., in accordance with signaled predictor information) to the reconstructed block, which may be generated using a decoded reference block of the same frame. Intra-prediction 238 may apply a suitable interpolation filter type (e.g., in accordance with signaled interpolation filter information) to the reconstructed block to generate predicted samples 212.

Inter-prediction 236 may determine a reconstructed vector based on a residual vector and a selected vector predictor candidate. Inter-prediction 236 may apply a reconstructed predictor or vector (e.g., in accordance with signaled predictor information) to a reconstructed block, which may be generated using a decoded reference block of a different frame from decoded picture buffer 232. Inter-prediction 236 may apply a suitable interpolation filter type (e.g., in accordance with signaled interpolation filter information) to the reconstructed block to generate predicted samples 212.

In-loop filter 228 may receive reconstructed predicted samples 226. In-loop filter 228 may apply one or more filters signaled in the encoded bitstream 180 to the reconstructed predicted samples 226. In-loop filter 228 may output decoded video 168₁.

### Understanding scalar quantization

In some implementations, equation 2 may be reformulated as equation 4 and equation 5 for forward quantization, and equation 3 may be reformulated as equation 4 and 6 for inverse quantization. ${I}_{sign} = sign \left(C\right)$ (eq. 4) $Z = floor \left(\frac{\left|C\right|}{S}+f\right)$ (eq. 5) ${C}_{_} = Z ⋅ S ⋅ {I}_{sign}$ (eq. 6)

|*C*| is the absolute value of a transform coefficient C. The original transform coefficient can be scaled to obtain the transform coefficient C. In equation 5, *I_{sign}* represents the sign information of the transform coefficient obtained from the *sign*(*.* ) function, which returns the sign information of an input number (e.g., -1, 0, +1). Sign hiding methods can be implemented to hide the sign information of a transform coefficient in the video encoder, the sign information of the transform coefficient can be derived in the video decoder. For forward quantization as illustrated in equation 5, the term f represents one or more fixed rounding offsets (e.g., including 1/2). Z is an integer level of a quantized coefficient and S is a quantization step size. The *floor*(*.* ) function maps an input number to the nearest integer towards zero. For inverse quantization as illustrated in equation 6, a transform coefficient *C* can be reconstructed by multiplying the integer level of the quantized coefficient Z, the quantization step size S, and the sign information *I_{sign}.*

Initially, a quantizer (e.g., a quantizer in transform and quantization 214 of FIG. 2) may determine an initial quantization parameter and quantization step size for each non-zero transform coefficient in a transform coefficient block. In some cases, a quantizer can perform one or more operations to handle zero transform coefficients in a transform coefficient block.

Depending on the video codec standard and configuration, the quantizer may determine whether to use a sign hiding method for the non-zero transform coefficient in a transform coefficient block. If not using the sign hiding method, the quantizer may apply equation 1 or equation 2 to the non-zero transform coefficient using one or two fixed rounding offsets for transform coefficient quantization.

If using the sign hiding method, depending on the video codec standard and configuration, the quantizer can determine whether to use one or more advanced quantization techniques for each non-zero transform coefficient in a transform coefficient block.

If not using one or more advanced quantization techniques, the quantizer can apply equation 5 to a non-zero transform coefficient using one or two fixed rounding offsets for transform coefficient quantization. After this operation, the quantizer can implement a sign hiding method for the quantized transform coefficients based on the sign information obtained from equation 4.

If using one or more advanced quantization techniques, the quantizer can apply equation 5 to a non-zero transform coefficient using one or two fixed rounding offsets for transform coefficient quantization and determine an initial integer level of quantized coefficient. The quantizer can perform an advanced quantization optimization iteration to iterate through updating/evaluating one or more other/intermediate integer levels to determine a (final) integer level of quantized coefficient. After these operations, the quantizer can implement a sign hiding method for the quantized transform coefficients based on the sign information obtained from equation 4.

After quantization is performed, the quantizer may implement post-processing operations on the quantized non-zero transform coefficients and zero transform coefficients in a transform coefficient block, before entropy coding is applied to the quantized transform coefficients.

### Distortion-aware rounding offsets

As discussed in the overview, using one or two fixed rounding offsets does not allow for flexible tradeoffs between bitrate and quality. Also, using one or two fixed rounding offsets may not be sufficient for adapting to different scenarios and color channels. Moreover, advanced quantization techniques involving iterations of a local optimization loop can be computationally complex. To address one or more of these concerns, the improved quantization techniques using distortion-aware rounding offsets can be implemented. FIG. 5 illustrates transform 502 and quantizer 504 implementing distortion-aware rounding offsets, according to some embodiments of the disclosure.

Quantizer 504 may receive a transform coefficient, such as a transform coefficient from a transform coefficient block and generate an integer level of quantized coefficient based on the transform coefficient.

Quantizer 504 may include distortion level estimation 520. Instead of using one or two fixed rounding offsets, quantizer 504 uses distortion-aware rounding offsets to achieve better tradeoffs between bitrate and quality. The (overall) distortion *level D* can be determined/estimated by distortion level estimation 520 based on one or more distortion contributions, e.g., *D*₀*, D*₁*,... Dₙ.* In some cases, the distortion contributions can be determined/utilized based on information available in the encoder, e.g., encoder 102. In some cases, the (overall) distortion level *D* can be modeled as a weighted averaging function of one or more distortion contributions. In some embodiments, quantizer 504 may apply (different) weights to distortion contributions when determining the (overall) distortion level and adapting the distortion estimation to different scenarios and color channels. In some embodiments, quantizer 504 may apply (different) functions relating distortion level to rounding offset when determining the distortion-aware rounding offsets and adapting the distortion-aware rounding offsets to different scenarios and color channels. The intuition behind the distortion-aware rounding offsets is that the suitable value set of the rounding offsets has a significant dependence on the (overall) distortion level *D* and varies in different cases.

The (overall) distortion level *D* can be quantified at one or more levels, including a transform coefficient block level, a partitioned block level, a slice level, a frame level, or a segment level. Pixel distortion quantified by the (overall) distortion level *D* can come from one or more distortion contributions.

Distortion contribution *D*₀ can be determined by considering the scalar quantizer information, including but not limited to quantization step sizes, quantization parameters, etc.

Distortion contribution *D*₁ can be determined by considering the coefficient information, including but not limited to coefficient magnitudes, coefficient positions in coefficient blocks, coefficient block sizes, etc.

Distortion contribution *D*₂ can be determined by considering the encoding configuration and prediction mode information, including but not limited to the number of reference frames, the encoding types (e.g., all Intra, low delay, random access, scalability types and other types), the frame positions in a GOP, the GOP sizes, prediction block modes (e.g., Intra angular, Intra non-angular, Inter uni-direction, Inter bi-direction, merge, compound, and other modes), prediction block sizes, etc.

Distortion contribution *D*₃ could be determined by measuring the prediction error using distortion metrics, including but not limited to sum of absolute differences (SAD), sum of Absolute transformed differences (SATD), sum of squared differences (SSD), mean absolute error (MAE), mean squared error (MSE), PSNR, etc.

The (overall) distortion level *D* can be calculated/determined/estimated using a weighted sum of one or more distortion contributions, as illustrated in equation 7. *wₖ* are the corresponding weights to represent their relative proportions/contributions/impacts to the (overall) distortion level *D.* In some cases, the weights *wₖ* can be fixed or predetermined. In some cases, the weights *wₖ* could be varied/changed for different scenarios and color channels. $D = {\sum }_{k = 0}^{n} {w}_{k} ⋅ {D}_{k} = {w}_{k} ⋅ {D}_{3} + ⋯ + {w}_{3} ⋅ {D}_{3} + {w}_{2} ⋅ {D}_{2} + {w}_{1} ⋅ {D}_{1} + {w}_{0} ⋅ {D}_{0}$ (eq. 7)

In some embodiments, distortion level estimation 520 may vary or change the weights *wₖ* to adapt to different scenarios and/or color channels. Varying or changing the weights *wₖ* can adjust/modify a particular distortion contribution's impact on the estimated distortion level.

In some embodiments, distortion level estimation 520 may set one or more weights *wₖ* to 0 when calculating the estimated distortion level to adapt to different scenarios and/or color channels. One or more weights *wₖ* may be set to 0 to remove a particular distortion contribution's impact on the estimated distortion level, if appropriate for the particular scenario or the particular color channel.

In some embodiments, distortion level estimation 520 may set one or more weights *wₖ* to 0 when calculating the estimated distortion level, depending on one or more tradeoffs between computing complexity and target accuracy or quality. One or more weights *wₖ* may be set to 0 to remove a particular distortion contribution's impact on the estimated distortion level, if appropriate for the particular tradeoff being considered.

Because the probability distributions of the transform coefficients are usually nonuniform inside quantization intervals and have varying distributions caused by the mixture of different contributions, the expected value of the transform coefficients inside a quantization interval is usually not located in the center of the quantization interval. Based on this insight, it may be better for the integer level inside a quantization interval to be close as possible to the expected value of the transform coefficients inside the quantization interval to minimize the quantization error. Because the rounding offsets could control the quantization interval locations of the scalar quantizer, there is an opportunity to improve the integer levels to better fit the expected values of the transform coefficients inside the quantization intervals.

Furthermore, rounding offset determination 530 can be implemented to determine suitable rounding offsets in the encoder based on the (overall) distortion level *D*, which can help to achieve better tradeoffs between bitrate and quality for different scenarios and color channels. Rounding offset determination 530 may determine a rounding offset based on the (overall) distortion level D according to a function that associates distortion level to rounding offset. In some embodiments, the function that associates the distortion level *D* to the rounding offset *f(D)* can be modeled as a one-variable polynomial function with respect to the (overall) distortion level *D*, as illustrated by equation 8. {*a, b, c*} are the coefficients in the polynomial function and could be varied/changed for different scenarios and color channels. $f \left(D\right) = a ⋅ {D}^{2} + b ⋅ D + c$ (eq. 8)

*f*(*D*) represents distortion-aware rounding offsets obtained by applying a polynomial function with respect to and/or as a function of the (overall) distortion level *D.*

The polynomial function can define quadratic and/or linear relations. Potentially different functions can be used to define a particular quadratic and/or linear relations for a given range of the distortion level. Potentially different functions can be used to define a particular quadratic and/or linear relations in one or more segments within a range of the distortion level.

In some cases, one or more of the coefficients {*a, b, c*} can be set to 0 for the estimation and calculation of a rounding offset *f*(*D*) in a certain range or segment, depending on one or more tradeoffs between computing complexity and target accuracy or quality.

The rounding offset *f*(*D*) may be implemented to have a range [0,1/2] for coefficient quantization to keep the quantization error small.

In some cases, *f*(*D*) may reflect a convex shape. In some cases, *f*(*D*) may reflect a concave shape. In some cases, *f*(*D*) may include a linear function. In some cases, *f*(*D*) may include a polynomial function.

In some cases, *f*(*D*) may include a (polynomial) function corresponding to a particular range of the distortion level. Depending on the scenario (e.g., the specific codec), the range (e.g., the upper limit and lower limit) of distortion level can be different. For example, some codecs may support different ranges of quantization parameters (e.g., [0, 63], or [0, 53]). Accordingly, different functions that associate a distortion level to a rounding offset can be used for scenarios with different ranges of distortion level.

In some cases, *f*(*D*) may include a (polynomial) function corresponding to a particular segment within a range of the distortion level. In some cases, *f*(*D*) may include one or more (polynomial or linear) functions corresponding to one or more segments within a range of the distortion level. Using different functions for different segments within a range of the distortion level can offer flexibility in how the distortion level may impact the rounding offset, depending on within which segment of the distortion level falls.

In some embodiments (illustrated by option 1 of FIG. 5), determine integer level of quantized coefficient 580 may quantize a transform coefficient using the rounding offset, as determined by rounding offset determination 530, to determine an integer level of quantized coefficient. The encoder may generate an encoded bitstream based on the integer level of quantized coefficient.

In some embodiments (illustrated by option 2 of FIG. 5), a group of one or more predetermined integer errors, or an integer error set, *E* can be used to produce a group of one or more candidate rounding offsets and a corresponding group of one or more candidate integer levels of quantized coefficient, based on the initial rounding offset *f*(*D*)*,* if the quantity $\left(\frac{\left|C\right|}{S}-E\right)$ is greater than 0. The condition, $\left(\frac{\left|C\right|}{S}-E\right) > 0$, may ensure that expanding candidate integer levels does not change the sign of the transform coefficient. Using a group of one or more integer errors E (e.g., an integer error set) to expand/extend the candidate rounding offsets can add more flexibility in adjusting the quantization error. The flexibility may come from being able to achieve better tradeoffs between bitrate and quality using the group of one or more candidate rounding offsets.

Equation 4, equation 5, and equation 6 may be reformulated as follows: $\begin{matrix}{I}_{sign} = sign \left(C\right) \\ If \left(\frac{\left|C\right|}{S}-E\right) > 0 and E = \left\{-M;…;-1;0;1;…;N\right\} ,\end{matrix}$ (eq. 9) ${Z}_{E} = floor \left(\frac{\left|C\right|}{S}+\left(f\left(D\right)-E\right)\right)$ (eq. 10) ${Z}_{selected} = select \left({Z}_{E}\right)$ (eq. 11)

The group of one or more predefined integer errors E (the integer error set) can include or represent a series of one or more contiguous integers from *-M* to *N,* e.g., *E = {-M;* ...; -1; 0; 1; ...; *N*}*.* The values of -M and *N* can be determined based on one or more tradeoffs between computing complexity and target accuracy or quality. For example, the zero and low frequency transform coefficients could use smaller values of *M* and *N* to generate fewer candidate integer levels, while the high frequency transform coefficients could use larger values of *M* and *N* to generate more candidate integer levels. The values of *M* and *N* can be same or different values to adapt to different scenarios or color channels. The values of *M* and *N* may be the same. The values of *M* and *N* may be different. The value *M* may impact subjective or objective quality. The value *N* may impact subjective or objective quality.

For forward quantization as illustrated in equation 10, the term (*f*(*D*) - *E*) represents a group of one or more candidate rounding offsets depending on the estimated distortion level D and the group of predefined integer errors E (the integer error set), e.g., (*f*(*D*) *- E*) = {*f*(*D*) *+ M*; ...*;f*(*D*) *+ 1; f*(*D*); *f*(*D*) *-* 1; ...; *f*(*D*) *- N*}. *Z_{E}* can include or represents a group of one or more candidate integer levels of quantized coefficient, e.g., *Z_{E}* = {*Z_{-M}*; ...; *Z*_{*-*1};*Z₀*; *Z*₁; ...;*Z_{N}*}*,* as calculated by equation 10.

Based on the group of predefined integer errors *E* (the integer error set), determine candidate rounding offsets 540 can determine one or more candidate rounding offsets (*f*(*D*) - *E*) using the one or more predefined integer errors.

Determine candidate integer levels of quantized coefficient 550 can quantize the transform coefficient using the one or more candidate rounding offsets (*f*(*D*) - *E*), as illustrated in equation 10, to determine one or more candidate integer levels of quantized coefficient *Z_{E}*.

Select integer level of quantized coefficient from candidate integer levels 560 may select a (final) integer level of the quantized coefficient *Z_{selected}* from a group of one or more candidate integer levels of the quantized coefficient *Z_{E}*. The implemented candidate generation and selection methods can depend on one or more tradeoffs between computing complexity and target accuracy or quality. For instance, more candidate rounding offsets and candidate integer levels may be generated and evaluated for high frequency transform coefficients than zero and low frequency transform coefficients. The encoder may generate an encoded bitstream using the selected integer level of quantized coefficient.

Optionally, advanced quantization optimization 570 may be implemented in quantizer 504 to iterate through a local optimization loop to update/evaluate a group of one or more candidate integer levels of quantized coefficient and/or determine a (final) integer level of quantized coefficient.

**In** some embodiments, if *M* = *N* = 0, the group of predefined integer errors E (the integer error set) may not be relevant or used because of E = {0}. Equation 10 and equation 11 may be reformulated as follows: $\begin{matrix}If M = N = 0 and E = \left\{0\right\} , \\ {Z}_{selected} = {Z}_{0} = floor \left(\frac{\left|C\right|}{S}+f\left(D\right)\right)\end{matrix}$ (eq. 12)

*Z*₀ is an integer level of the quantized coefficient. The rounding offset *f*(*D*) determined by rounding offset determination 530 may not be expanded/extended to a group of candidate rounding offsets and the selection operation on a group of candidate integer levels as illustrated in equation 11 may be skipped or omitted because of *Z_{selected}* = *Z*₀. For forward quantization, as illustrated in equation 12, the term *f*(*D*) represents the distortion-aware rounding offset depending on the estimated distortion level D as determined in rounding offset determination 530.

For inverse quantization, the transform coefficient can be reconstructed as follows: ${C}_{_} = {Z}_{selected} ⋅ S ⋅ {I}_{sign}$ (eq. 13)

The transform coefficient *C* can be reconstructed by multiplying the selected (final) integer level of the quantized coefficient *Z_{selected},* the quantization step size S, and the sign information *I_{sign}.*

### Methods for improved quantization

FIG. 6 is a flow diagram illustrating method 600 for improved quantization, according to some embodiments of the disclosure. Method 600 may be performed by quantizer 504 of FIG. 5.

At node A, a quantizer (e.g., quantizer 504 of FIG. 5) may determine an initial quantization parameter and quantization step size for each non-zero transform coefficient in a transform coefficient block. In some cases, the quantizer can perform one or more operations to handle zero transform coefficients in a transform coefficient block.

Depending on the video codec standard and configuration, the quantizer may determine whether to use a sign hiding method for the non-zero transform coefficient in a transform coefficient block. The quantizer may perform check 602 to determine if sign hiding method is enabled/applicable. If not using the sign hiding method, method 600 proceeds to 610 via the NO path. If using the sign hiding method, method 600 proceeds to check 604 via the YES path.

In 610, the quantizer may estimate a distortion level.

In 612, the quantizer may determine one or more rounding offsets based on the distortion level.

In 614, the quantizer may determine one or more integer levels of quantized coefficient using the one or more rounding offsets from 612.

In 616, the quantizer may select an integer level of quantized coefficient from the one or more integer levels determined in 614.

Depending on the video codec standard and configuration, the quantizer may determine whether to use one or more advanced quantization techniques for each non-zero transform coefficient in a transform coefficient block. The quantizer may perform check 604 to determine if advanced quantization is enabled/applicable. If not using advanced quantization, method 600 proceeds to 610 via the NO path. If using advanced quantization, method 600 proceeds to 610 via the YES path.

If using one or more advanced quantization techniques, upon completing 614, the quantizer may perform advanced quantization optimization iteration in 660 and loop back to 610 in a local optimization loop. The local optimization loop can iterate through updating/evaluating one or more other/intermediate rounding offsets and/or integer levels to determine a (final/optimal) integer level for quantized coefficient. Upon finishing the local optimization loop, method 600 proceeds to 680.

If not using one or more advanced quantization techniques, upon completing 614, the quantizer may perform a selection operation on one or more integer levels of quantized coefficient in 616 and proceed to 680.

In 680, the quantizer may implement a sign hiding method for the quantized transform coefficients based on the sign information of the transform coefficient.

After quantization is performed, method 600 proceeds to node B. The quantizer may implement post-processing operations on the quantized non-zero transform coefficients and zero transform coefficients in a transform coefficient block, before entropy coding is applied to the quantized transform coefficients.

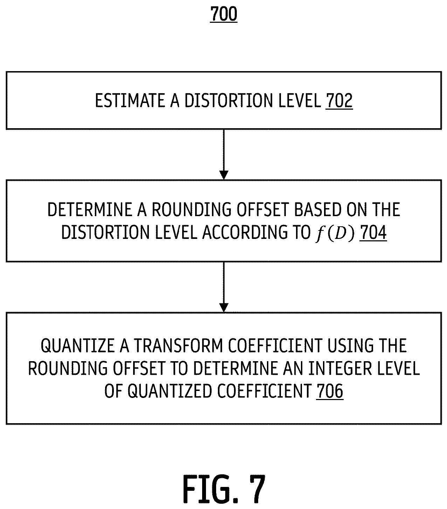

FIG. 7 is a flow diagram illustrating method 700 for improved quantization, according to some embodiments of the disclosure. Method 700 may be performed by quantizer 504 of FIG. 5.

In 702, the quantizer may estimate a distortion level.

In 704, the quantizer may determine a rounding offset based on the distortion level according to a function that associates distortion level to rounding offset.

In 706, the quantizer may quantize a transform coefficient using the rounding offset to determine an integer level of quantized coefficient.

### Exemplary computing device

FIG. 8 is a block diagram of an apparatus or a system, e.g., an exemplary computing device 800, according to some embodiments of the disclosure. One or more computing devices 800 may be used to implement the functionalities described with the FIGS. and herein. A number of components are illustrated in FIG. 8 can be included in the computing device 800, but any one or more of these components may be omitted or duplicated, as suitable for the application. In some embodiments, some or all of the components included in the computing device 800 may be attached to one or more motherboards. In some embodiments, some or all of these components are fabricated onto a single system on a chip (SoC) die. Additionally, in various embodiments, the computing device 800 may not include one or more of the components illustrated in FIG. 8, and the computing device 800 may include interface circuitry for coupling to the one or more components. For example, the computing device 800 may not include a display device 806, and may include display device interface circuitry (e.g., a connector and driver circuitry) to which a display device 806 may be coupled. In another set of examples, the computing device 800 may not include an audio input device 818 or an audio output device 808 and may include audio input or output device interface circuitry (e.g., connectors and supporting circuitry) to which an audio input device 818 or audio output device 808 may be coupled.

The computing device 800 may include a processing device 802 (e.g., one or more processing devices, one or more of the same type of processing device, one or more of different types of processing device). The processing device 802 may include processing circuitry or electronic circuitry that process electronic data from data storage elements (e.g., registers, memory, resistors, capacitors, quantum bit cells) to transform that electronic data into other electronic data that may be stored in registers and/or memory. Examples of processing device 802 may include a CPU, a GPU, a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 800 may include a memory 804, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 804 includes one or more non-transitory computer-readable storage media. In some embodiments, memory 804 may include memory that shares a die with the processing device 802.

In some embodiments, memory 804 includes one or more non-transitory computer-readable media storing instructions executable to perform operations described herein, such as operations illustrated in FIGS. 1-5, method 600, and method 700. In some embodiments, memory 804 includes one or more non-transitory computer-readable media storing instructions executable to perform one or more operations of encoder 102. In some embodiments, memory 804 includes one or more non-transitory computer-readable media storing instructions executable to perform one or more operations of quantizer 504 of FIG. 6. The instructions stored in memory 804 may be executed by processing device 802.

In some embodiments, memory 804 may store data, e.g., data structures, binary data, bits, metadata, files, blobs, etc., as described with the FIGS. and herein. Memory 804 may include one or more non-transitory computer-readable media storing one or more of: input frames to the encoder (e.g., video frames 104), intermediate data structures computed by the encoder, bitstream generated by the encoder (encoded bitstream 180), bitstream received by a decoder (encoded bitstream 180), intermediate data structures computed by the decoder, and reconstructed frames generated by the decoder. Memory 804 may include one or more non-transitory computer-readable media storing one or more of: data received and/or data generated by quantizer 504. Memory 804 may include one or more non-transitory computer-readable media storing one or more of: data received and/or data generated by method 600 of FIG. 6. Memory 804 may include one or more non-transitory computer-readable media storing one or more of: data received and/or data generated by method 700 of FIG. 7.

In some embodiments, the computing device 800 may include a communication device 812 (e.g., one or more communication devices). For example, the communication device 812 may be configured for managing wired and/or wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 812 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 812 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 812 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 812 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 4G, 4G, 5G, and beyond. The communication device 812 may operate in accordance with other wireless protocols in other embodiments. The computing device 800 may include an antenna 822 to facilitate wireless communications and/or to receive other wireless communications (such as radio frequency transmissions). Computing device 800 may include receiver circuits and/or transmitter circuits. In some embodiments, the communication device 812 may manage wired communications, such as electrical, optical, or any other suitable communication protocols (e.g., the Ethernet). As noted above, the communication device 812 may include multiple communication chips. For instance, a first communication device 812 may be dedicated to shorter-range wireless communications such as Wi-Fi or Bluetooth, and a second communication device 812 may be dedicated to longer-range wireless communications such as global positioning system (GPS), EDGE, GPRS, CDMA, WiMAX, LTE, EV-DO, or others. In some embodiments, a first communication device 812 may be dedicated to wireless communications, and a second communication device 812 may be dedicated to wired communications.

The computing device 800 may include power source / power circuitry 814. The power source / power circuitry 814 may include one or more energy storage devices (e.g., batteries or capacitors) and/or circuitry for coupling components of the computing device 800 to an energy source separate from the computing device 800 (e.g., DC power, AC power, etc.).

The computing device 800 may include a display device 806 (or corresponding interface circuitry, as discussed above). The display device 806 may include any visual indicators, such as a heads-up display, a computer monitor, a projector, a touchscreen display, a liquid crystal display (LCD), a light-emitting diode display, or a flat panel display, for example.

The computing device 800 may include an audio output device 808 (or corresponding interface circuitry, as discussed above). The audio output device 808 may include any device that generates an audible indicator, such as speakers, headsets, or earbuds, for example.

The computing device 800 may include an audio input device 818 (or corresponding interface circuitry, as discussed above). The audio input device 818 may include any device that generates a signal representative of a sound, such as microphones, microphone arrays, or digital instruments (e.g., instruments having a musical instrument digital interface (MIDI) output).

The computing device 800 may include a GPS device 816 (or corresponding interface circuitry, as discussed above). The GPS device 816 may be in communication with a satellite-based system and may receive a location of the computing device 800, as known in the art.

The computing device 800 may include a sensor 830 (or one or more sensors). The computing device 800 may include corresponding interface circuitry, as discussed above). Sensor 830 may sense physical phenomenon and translate the physical phenomenon into electrical signals that can be processed by, e.g., processing device 802. Examples of sensor 830 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 800 may include another output device 810 (or corresponding interface circuitry, as discussed above). Examples of the other output device 810 may include an audio codec, a video codec, a printer, a wired or wireless transmitter for providing information to other devices, haptic output device, gas output device, vibrational output device, lighting output device, home automation controller, or an additional storage device.

The computing device 800 may include another input device 820 (or corresponding interface circuitry, as discussed above). Examples of the other input device 820 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 800 may have any desired form factor, such as a handheld or mobile computer system (e.g., a cell phone, a smart phone, a mobile Internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device, or a wearable computer system. In some embodiments, the computing device 800 may be any other electronic device that processes data.

### Select examples

Example 1 provides a method, including estimating a distortion level; determining a rounding offset based on the distortion level according to a function that associates distortion level to rounding offset; and quantizing a transform coefficient using the rounding offset to determine an integer level of quantized coefficient.

Example 2 provides the method of example 1, where estimating the distortion level includes estimating the distortion level based on one or more of: a quantization step size, and a quantization parameter.

Example 3 provides the method of example 1 or 2, where estimating the distortion level includes estimating the distortion level based on one or more of: a magnitude of the transform coefficient, a position of the transform coefficient in a transform coefficient block, a size of the transform coefficient block.

Example 4 provides the method of any one of examples 1-3, where estimating the distortion level includes estimating the distortion level based on one or more of: a number of reference frames, an encoding type, a position of a frame in a group of pictures (GOP), a size of the GOP, a mode of a prediction block, a size of the prediction block.

Example 5 provides the method of any one of examples 1-4, where estimating the distortion level includes estimating the distortion level based on one or more of: a sum of absolute differences, a sum of absolute transformed differences, a sum of squared differences, a mean absolute error, a mean squared error, and a peak signal-to-noise ratio.

Example 6 provides the method of any one of examples 1-5, where estimating the distortion level includes calculating a weighted sum of one or more distortion contributions.

Example 7 provides the method of any one of examples 1-6, where the function that associates distortion level to rounding offset is a polynomial function.

Example 8 provides the method of any one of examples 1-6, where the function that associates distortion level to rounding offset includes one or more polynomial functions corresponding to one or more segments of a range of the distortion level.

Example 9 provides the method of any one of examples 1-7, further including selecting a selected integer level of quantized coefficient from a group of one or more candidate integer levels of quantized coefficient, the group including the integer level of quantized coefficient.

Example 10 provides the method of example 9, further including determining a further rounding offset based on an integer error; and quantizing the transform coefficient using the further rounding offset to determine a further integer level of quantized coefficient; where the group further includes the further integer level of quantized coefficient.

Example 11 provides one or more non-transitory computer-readable media storing instructions that, when executed by one or more processors, cause the one or more processors to: estimate a distortion level; determine a rounding offset based on the distortion level according to a function that associates distortion level to rounding offset; and quantizing a transform coefficient using the rounding offset to determine an integer level of quantized coefficient.

Example 12 provides the one or more non-transitory computer-readable media of example 11, where estimating the distortion level includes estimating the distortion level based on one or more of: a quantization step size, and a quantization parameter.

Example 13 provides the one or more non-transitory computer-readable media of example 11 or 12, where estimating the distortion level includes estimating the distortion level based on one or more of: a magnitude of the transform coefficient, a position of the transform coefficient in a transform coefficient block, a size of the transform coefficient block.

Example 14 provides the one or more non-transitory computer-readable media of any one of examples 11-13, where estimating the distortion level includes estimating the distortion level based on one or more of: a number of reference frames, an encoding type, a position of a frame in a group of pictures (GOP), a size of the GOP, a mode of a prediction block, a size of the prediction block.

Example 15 provides the one or more non-transitory computer-readable media of any one of examples 11-14, where estimating the distortion level includes estimating the distortion level based on one or more of: a sum of absolute differences, a sum of absolute transformed differences, a sum of squared differences, a mean absolute error, a mean squared error, and a peak signal-to-noise ratio.

Example 16 provides the one or more non-transitory computer-readable media of any one of examples 11-15, where estimating the distortion level includes calculating a weighted sum of one or more distortion contributions.

Example 17 provides the one or more non-transitory computer-readable media of any one of examples 11-16, where the function that associates distortion level to rounding offset is a polynomial function.

Example 18 provides the one or more non-transitory computer-readable media of any one of examples 11-16, where the function that associates distortion level to rounding offset includes one or more polynomial functions corresponding to one or more segments of a range of the distortion level.

Example 19 provides the one or more non-transitory computer-readable media of any one of examples 11-17, where the instructions further cause the one or more processors to: select a selected integer level of quantized coefficient from a group of one or more candidate integer levels of quantized coefficient, the group including the integer level of quantized coefficient.

Example 20 provides the one or more non-transitory computer-readable media of example 19, where the instructions further cause the one or more processors to: determine a further rounding offset based on an integer error; and quantize the transform coefficient using the further rounding offset to determine a further integer level of quantized coefficient; where the group further includes the further integer level of quantized coefficient.

Example 21 provides an apparatus, including one or more processors; and apparatus storing instructions that, when executed by the one or more processors, cause the one or more processors to: estimate a distortion level; determine a rounding offset based on the distortion level according to a function that associates distortion level to rounding offset; and quantizing a transform coefficient using the rounding offset to determine an integer level of quantized coefficient.

Example 22 provides the apparatus of example 21, where estimating the distortion level includes estimating the distortion level based on one or more of: a quantization step size, and a quantization parameter.

Example 23 provides the apparatus of example 21 or 22, where estimating the distortion level includes estimating the distortion level based on one or more of: a magnitude of the transform coefficient, a position of the transform coefficient in a transform coefficient block, a size of the transform coefficient block.

Example 24 provides the apparatus of any one of examples 21-23, where estimating the distortion level includes estimating the distortion level based on one or more of: a number of reference frames, an encoding type, a position of a frame in a group of pictures (GOP), a size of the GOP, a mode of a prediction block, a size of the prediction block.

Example 25 provides the apparatus of any one of examples 21-24, where estimating the distortion level includes estimating the distortion level based on one or more of: a sum of absolute differences, a sum of absolute transformed differences, a sum of squared differences, a mean absolute error, a mean squared error, and a peak signal-to-noise ratio.

Example 26 provides the apparatus of any one of examples 21-25, where estimating the distortion level includes calculating a weighted sum of one or more distortion contributions.

Example 27 provides the apparatus of any one of examples 21-26, where the function that associates distortion level to rounding offset is a polynomial function.

Example 28 provides the apparatus of any one of examples 21-26, where the function that associates distortion level to rounding offset includes one or more polynomial functions corresponding to one or more segments of a range of the distortion level.

Example 29 provides the apparatus of any one of examples 21-27, where the instructions further cause the one or more processors to: select a selected integer level of quantized coefficient from a group of one or more candidate integer levels of quantized coefficient, the group including the integer level of quantized coefficient.

Example 30 provides the apparatus of example 29, where the instructions further cause the one or more processors to: determine a further rounding offset based on an integer error; and quantize the transform coefficient using the further rounding offset to determine a further integer level of quantized coefficient; where the group further includes the further integer level of quantized coefficient.

Example A provides a computer program product comprising instructions, that when executed by a processor, causes the processor to perform a method of any one of examples 1-10.

Example B provides an apparatus comprising means for performing a method of any one of examples 1-10.

Example C provides a quantizer as described and illustrated herein.

Example E provides an encoder having a quantizer as described and illustrated herein.

Example F provides an apparatus comprising computing circuitry for performing a method of any one of examples 1-10.

### Variations and other notes

Although the operations of the example method shown in and described with reference to FIGS. 1-7 are illustrated as occurring once each and in a particular order, it will be recognized that some operations may be performed in any suitable order and repeated as desired. Additionally, one or more operations may be performed in parallel. Furthermore, the operations illustrated in FIGS. 1-7 may be combined or may include more or fewer details than described.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

For the purposes of the present disclosure, "A is less than or equal to a first threshold" is equivalent to "A is less than a second threshold" provided that the first threshold and the second thresholds are set in a manner so that both statements result in the same logical outcome for any value of A. For the purposes of the present disclosure, "B is greater than a first threshold" is equivalent to "B is greater than or equal to a second threshold" provided that the first threshold and the second thresholds are set in a manner so that both statements result in the same logical outcome for any value of B.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method, comprising:
estimating a distortion level;
determining a rounding offset based on the distortion level according to a function that associates distortion level to rounding offset; and
quantizing a transform coefficient using the rounding offset to determine an integer level of quantized coefficient.

2. The method of claim 1, wherein estimating the distortion level comprises estimating the distortion level based on one or more of: a quantization step size, and a quantization parameter.

3. The method of claim 1 or 2, wherein estimating the distortion level comprises estimating the distortion level based on one or more of: a magnitude of the transform coefficient, a position of the transform coefficient in a transform coefficient block, a size of the transform coefficient block.

4. The method of any one of claims 1-3, wherein estimating the distortion level comprises estimating the distortion level based on one or more of: a number of reference frames, an encoding type, a position of a frame in a group of pictures (GOP), a size of the GOP, a mode of a prediction block, a size of the prediction block.

5. The method of any one of claims 1-4, wherein estimating the distortion level comprises estimating the distortion level based on one or more of: a sum of absolute differences, a sum of absolute transformed differences, a sum of squared differences, a mean absolute error, a mean squared error, and a peak signal-to-noise ratio.

6. The method of any one of claims 1-5, wherein estimating the distortion level comprises calculating a weighted sum of one or more distortion contributions.

7. The method of any one of claims 1-6, wherein the function that associates distortion level to rounding offset is a polynomial function.

8. The method of any one of claims 1-7, wherein the function that associates distortion level to rounding offset includes one or more polynomial functions corresponding to one or more segments of a range of the distortion level.

9. The method of any one of claims 1-8, further comprising:
selecting a selected integer level of quantized coefficient from a group of one or more candidate integer levels of quantized coefficient, the group including the integer level of quantized coefficient.

10. The method of claim 9, further comprising:
determining a further rounding offset based on an integer error; and
quantizing the transform coefficient using the further rounding offset to determine a further integer level of quantized coefficient;
wherein the group further includes the further integer level of quantized coefficient.

11. One or more non-transitory computer-readable media storing instructions that, when executed by one or more processors, cause the one or more processors to perform a method according to any one of claims 1-10.

12. An apparatus, comprising:
one or more processors; and
apparatus storing instructions that, when executed by the one or more processors, cause the one or more processors to perform a method according to any one of claims 1-10

13. An apparatus comprising means for performing perform a method according to any one of claims 1-10.
